## Europäisches Patentamt

## European Patent Office

## Office européen des brevets

(19)

(11) Veröffentlichungsnummer: **0 187 225**

**A2**

(12) # EUROPÄISCHE PATENTANMELDUNG

(21) Anmeldenummer: 85114414.7

(22) Anmeldetag: 13.11.85

(51) Int. Cl.⁴: **B 60 R 22/20**

(30) Priorität: 15.11.84 DE 3441798
04.05.85 DE 3516059

(43) Veröffentlichungstag der Anmeldung:
16.07.86 Patentblatt 86/29

(84) Benannte Vertragsstaaten:
DE FR GB IT SE

(71) Anmelder: Autoflug GmbH & Co Fahrzeugtechnik
Industriestrasse 10 Postfach 1180
D-2084 Rellingen 2(DE)

(72) Erfinder: Harenberg, Holger
Holstenstrasse 12
D-2084 Rellingen 1(DE)

(74) Vertreter: Kühnemann, Klaus et al,
Patentanwälte Dipl.-Ing. Klaus Kühnemann Dr.-Ing.
Karl-Ernst Müller Sonderburgstrasse 36
D-4000 Düsseldorf 11(DE)

(54) Höhenverstellvorrichtung für einen Umlenk- oder Befestigungsbeschlag.

(57) Bei einer Vorrichtung zur Höhenverstellung des oberen Umlenk- oder Befestigungsbeschlages für den Schultergurt eines Sicherheitsgurtsystems insbesondere in Kraftfahrzeugen, bestehend aus einer an einem Fahrzeug-Aufbauteil angebrachten Riegelvorrichtung mit einer Führungsschiene mit beiderseits eines Führungsschlitzes angeordneten Ausnehmungen, in welche ein zugeordnetes Raststück eingreift, welches in einem im Führungsschienenprofil längsbeweglichen Gleitstück gegen Federdruck schwenkbeweglich zwischen einer Rastund einer Verschiebestellung gelagert ist, besteht das Problem, daß die Verbindung des Befestigungsmittels für den Umlenkbeschlag am Raststück als Schwachpunkt für die Kraftübertragung anzusehen ist und im übrigen die Bauhöhe der Vorrichtung entsprechend groß ist. Zur Vermeidung dieses Problems ist vorgesehen, daß das Befestigungsmittel (20) für den Umlenk- oder Befestigungsbeschlag das Raststück (17) durchgreifend in dem Gleitstück (15) verankert ist.

Fig. 2

Croydon Printing Company Ltd.

Patentanwälte
**Dipl.-Ing. Klaus Kühnemann**
**Dr.-Ing. Karl-Ernst Müller**
Sonderburgstraße 36
4000 Düsseldorf 11
Telefon (02 11) 57 55 55
Postgirokonto: Köln 794 14-501

Düsseldorf, den 12. November 1985
KM/sch 5

**0187225**

_ 1 _

Autoflug GmbH & Co
Fahrzeugtechnik
Industriestraße 10

2084 Rellingen 2

B e s c h r e i b u n g

Höhenverstellvorrichtung für einen
Umlenk- oder Befestigungsbeschlag

Die Erfindung betrifft eine Vorrichtung zur Höhenverstellung des oberen Umlenk- oder Befestigungsbeschlages für den Schultergurt eines Sicherheitsgurtsystems, insbesondere in Kraftfahrzeugen, bestehend
aus einer an einem Fahrzeug-Aufbauteil (Karosserie)
angebrachten Riegelvorrichtung mit einer Führungsschiene mit beiderseits eines Führungsschlitzes
angeordneten Ausnehmungen, in welche ein zugeordnetes Raststück eingreift, welches in einem im Führungsschienenprofil längsbeweglichen Gleitstück gegen
Federdruck schwenkbeweglich zwischen einer Rastund einer Verschiebestellung gelagert ist.

Eine Höhenverstellvorrichtung der eingangs genannten
Gattung ist in der DE-OS 29 47 391 beschrieben,
bei welcher das schwenkbar in einem in der Führungsschiene
längsbeweglichen Gleitstück angeordnete Raststück durch
Druck senkrecht zur Führungsschiene ausrastet und
so die Höhenverstellung des Beschlages ermöglicht.
Als Betätigungseinrichtung hierfür ist die Befestigungsschraube des Umlenkbeschlages an dem Raststück vorgesehen.

Diesem und weiteren bekannten Vorschlägen ist gemeinsam der Nachteil zu eigen, daß der Umlenk- oder Befestigungsbeschlag mittels eines Befestigungsmittels unmittelbar an dem jeweiligen Raststück angeschlagen, meist angeschraubt ist, so daß die Verbindung von Umlenkbeschlag und Raststück entsprechend stark ausgebildet sein muß, damit die im Unfallgeschehen auftretenden sehr großen Kräfte sicher übertragen werden können. Gleichzeitig stellen diese Kraftübertragungsstellen Schwachpunkte in den bekannten Systemen dar. Dies und der erforderliche Betätigungsweg zur Lösung der Verriegelung haben weiterhin zur Folge, daß eine gewisse, zur Herstellung der Verbindung zwischen Umlenkbeschlag und Raststück nötige Bauhöhe der Vorrichtung nicht unterschritten werden kann. Infolgedessen weisen die bekannten Höhenverstellvorrichtungen auch zahlreiche, aus entsprechend hochwertigen Materialien hergestellte Einzelteile auf, deren Herstellung und Montage entsprechende Kosten verursacht.

Der Erfindung liegt daher die Aufgabe zugrunde, eine gattungsgemäße Höhenverstellvorrichtung derart zu verbessern, daß möglichst wenig lastaufnehmende Teile erforderlich sind, die Bauhöhe gering gehalten werden kann, die Sicherheit der Kraftübertragung verbessert ist und schließlich Klappergeräusche infolge von Bewegungen der Einzelteile der Vorrichtung gegeneinander vermieden sind.

Die Lösung dieser Aufgabe ergibt sich einschließlich vorteilhafter Ausgestaltungen und Weiterbildungen aus dem Inhalt der Patentansprüche, welche dieser Beschreibung vorangestellt sind.

Mit der Erfindung ist zunächst der Vorteil verbunden, daß im Unfallgeschehen eine unmittelbare Krafteinleitung durch das das Befestigungsmittel für den Umlenkbeschlag umschließende Raststück in die Führungsschiene gegeben ist, wobei die kraftaufnehmenden Teile jeweils flächig und formschlüssig aneinander anliegen, indem im Unfallgeschehen das Befestigungsmittel aus dem Gleitstück herausgelöst wird und sich mit seiner Endgestaltung flach am Raststück abstützt.

Als weiterer Vorteil der erfindungsgemäßen Lösung ergibt sich dann, daß das Gleitstück als im Unfallgeschehen nicht tragend belastetes Teil aus einem NE-Metall oder bei einem bevorzugten Ausführungsbeispiel der Erfindung aus Kunststoff bestehen kann, wobei letzterer den Vorteil bietet, daß Klappergeräusche verhindernde Federgestaltungen unmittelbar am Gleitstück angeformt sein können. Weiterhin braucht eine ständige Schmierung der sich in der Führungsschiene bewegenden Teile nicht mehr vorgesehen zu werden. Zusätzlich ist als vorteilhafte Auswirkung der Erfindung zu nennen, daß die Führungs- und Betätigungsteile mit geringen Toleranzen als Spritz- und Druckgußteile preisgünstig hergestellt werden können.

Infolge der schon beschriebenen unmittelbaren Krafteinleitung ist weiterhin in vorteilhafter Weise eine besonders geringe Bauhöhe der Vorrichtung erreichbar, was bei den beengten Einbauverhältnissen in den Kraftfahrzeugen von besonderer Bedeutung ist, da für die Bemessung der freien Höhe im wesentlichen der Schwenkwinkel des Raststückes im Gleitstück ein Maß angibt, wobei aufgrund der Trennung des Betätigungsmittels der Betätigungsweg für die Bemessung der Bauhöhe nicht mehr von Bedeutung ist.

Ein besonderes Augenmerk gilt bei der Erfindung
weiterhin der Ausbildung des Raststückes, und hier
ergibt sich infolge der erfindungsgemäßen Ausprägung
der Rastvorsprünge eine besonders sichere Abstützung
und Kraftübertragung, indem die flächenhafte Anlage
des Raststückes an den zwischen den Ausnehmungen
der Führungsschiene befindlichen Abschnitten die
Rastvorsprünge des Raststückes in Richtung der Belastung und Verformung der Führungsschiene nachführt
und somit eine zusätzliche aufbiegende Seitenkraft
auf die Seitenwandungen der Führungsschiene vermieden
wird, wodurch letztendlich ein Aufbiegen des C-Profils
der Führungsschiene zu verhindern ist.

In weiteren Ausführungsbeispielen sind Betätigungsorgane
für das Raststück gezeigt, die insbesondere der
Schocksicherheit des Raststückes bei Seitenaufprall
oder Überschlag des Kraftfahrzeuges Rechnung tragen.
Dabei gehen die Betätigungsorgane davon aus, daß
am Gleitstück im Bereich des größten Schwenkweges
des Raststückes ein Ansatz ausgebildet ist, welcher
das Betätigungsorgan in dessen Ruhelage festlegt
und eine Bewegung des mit dem Betätigungsorgan gekoppelten Raststückes verhindert. Bei vorteilhaften
Ausgestaltungen sind die dazu eingesetzten Verbindungsteile zwischen Raststück und Betätigungsorgan insbesondere einstückig ausgebildet und aus einem federnden
Kunststoff hergestellt, so daß sich eine einfache
Herstellung dieser Teile und leichte Montage durch
Auf- und/oder Einklipsen ergeben.

In der Zeichnung sind Ausführungsbeispiele der Erfindung wiedergegeben, welche nachstehend beschrieben
werden. Es zeigen:

Fig. 1   den Riegelteil einer Höhenverstellvorrichtung
         in einer Vorderansicht,

Fig. 2   die Vorrichtung gemäß Fig. 1 in einer seitlichen Ansicht,

Fig. 3   die Höhenverstellvorrichtung in einer Aufsicht,

Fig. 4   in einer herausgehobenen Einzeldarstellung
         das Raststück in schaubildlicher Ansicht,

Fig. 5   einen Längsmittenschnitt durch die Höhenverstellvorrichtung mit Betätigungsorgan
         in verriegelter Stellung,

Fig. 6   den Gegenstand der Fig. 5 in entriegelter
         Stellung,

Fig. 7   einen Längsschnitt durch die Höhenverstellvorrichtung in einem das Betätigungsorgan
         betreffenden anderen Ausführungsbeispiel
         in verriegelter Stellung,

fig. 8   den Gegenstand der Fig. 7 in entriegelter
         Stellung,

Fig. 9   in einer vergrößerten Darstellung ein Einzelteil des Betätigungsorgans,

Fig. 10  einen Längsschnitt durch die Höhenverstellvorrichtung in einem das Betätigungsorgan
         betreffenden weiteren Ausführungsbeispiel
         in verriegelter Stellung,

**0187225**

Fig. 11  eine Vorderansicht der Vorrichtung gemäß
Fig. 10,

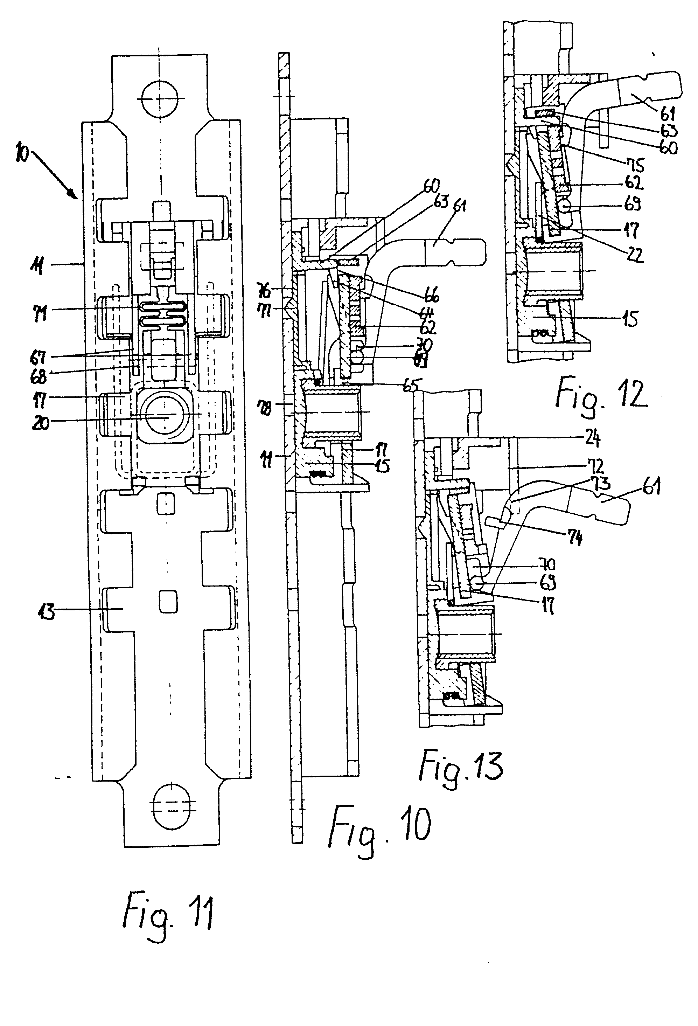

Fig. 12 und 13  den Gegenstand der Fig. 10 in entriegelter Stellung.

Die Riegelvorrichtung 10 einer Vorrichtung zur Höhenverstellung des oberen Umlenk- oder Befestigungsbeschlages besteht aus einer einseitig geschlitzten
C-förmigen Führungsschiene 11, in welcher beiderseits
eines Führungsschlitzes 12 Ausnehmungen 13 angeordnet
sind, zwischen denen sich Abschnitte 14 erstrecken.
Die Führungsschiene 11 wird mittels nicht dargestellter Befestigungsvorrichtungen an der ebenfalls
nicht dargestellten B- oder C-Säule eines Kraftfahrzeuges als Fahrzeug-Aufbauteil (Karosserie) angebracht.

In der Führungsschiene 11 ist ein deren Profil angepaßtes Gleitstück 15 längsverschieblich angeordnet,
welches an seinem oberen Ende einen aus der Führungsschiene 11 hervorstehenden Betätigungsansatz 24
trägt. Das Gleitstück 15 weist eine dem Führungsschlitz 12 zugewandte Ausnehmung 16 auf, in welcher
ein Raststück 17 schwenkbeweglich gelagert ist.
Hierzu verläuft die dem Boden der Führungsschiene
11 zugewandte Unterfläche der Ausnehmung 16 des
Gleitstückes 15 schräg nach oben auf die durch die
Führungsabschnitte 14 gekennzeichnete Ebene zu,
bis sich eine nur noch kurze Abstützfläche 18 ergibt,
die den festgelegten Schwenkpunkt für das im wesentlichen flächenhaft ausgebildete Raststück 17 bildet.

Das Raststück 17 weist etwa in seinem mittleren
Bereich eine Durchbrechung 19 auf, durch welche
ein Befestigungsmittel 20 für einen nicht dargestellten Umlenk- oder Befestigungsbeschlag geführt
ist. Das Befestigungsmittel 20 reicht bis in das an dieser Stelle aufgrund seiner zunehmenden Bodenstärke massiv ausgebildete Gleitstück 15 und weist an seinem diesbezüglichen Ende einen Flansch 21 mit einem Durchmesser auf, welcher größer ist als der Durchmesser der Durchbrechung 19 im Raststück 17. Der Flansch 21 kann in dem hier aus Kunststoff bestehenden Gleitstück 15 durch Einspritzen, Verklipsen, Einpressen oder dergleichen befestigt sein.

Oberhalb der Durchbrechung 19 ist das Raststück 17 gegen das Gleitstück 15 mittels einer Druckfeder 22 federnd abgestützt, die sich einerseits am Raststück 17 und andererseits in einem am Boden des Gleitstückes 15 ausgebildeten Sackloch 23 abstützt.

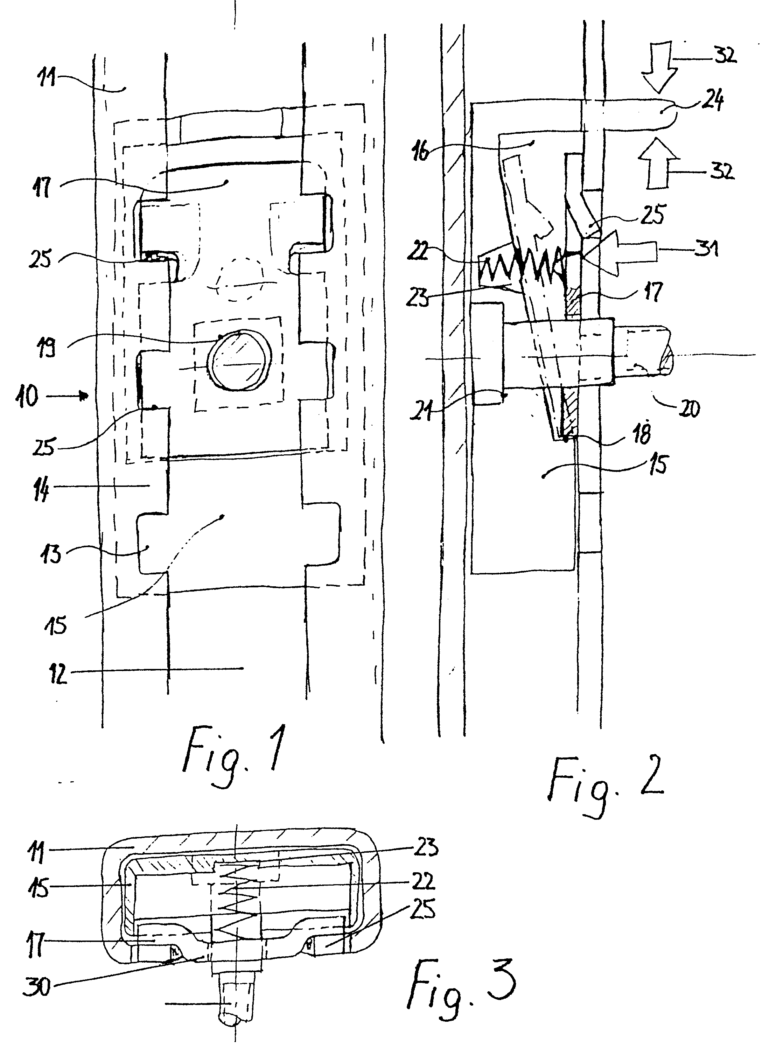

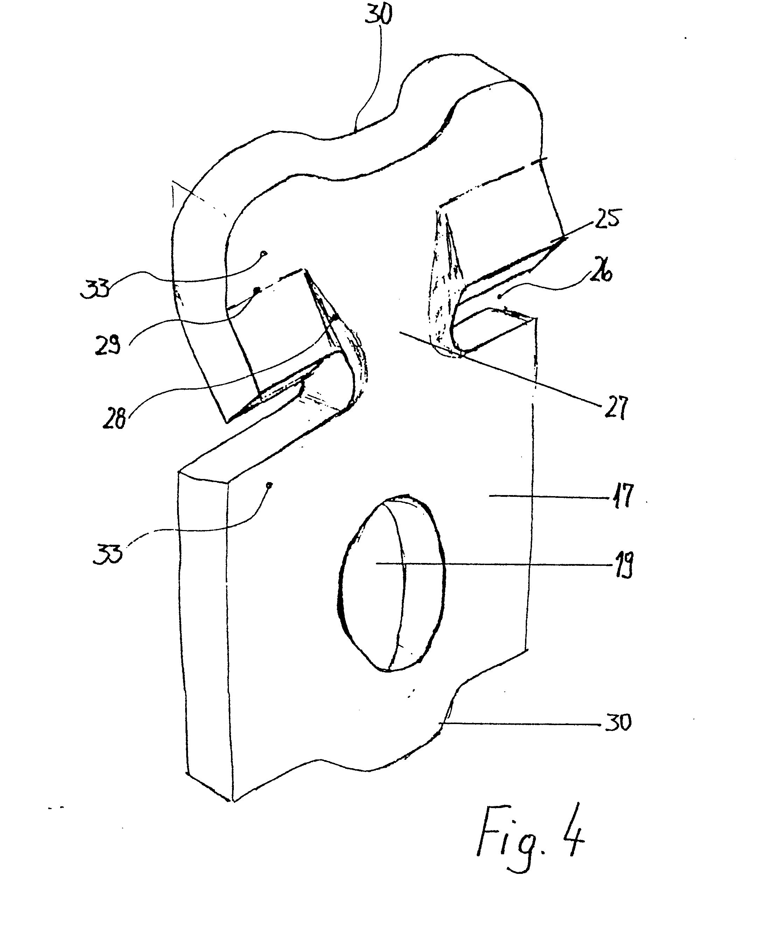

Das Raststück 17 selbst ist im wesentlichen eben und in der Raststellung parallel zu den Abschnitten 14 zwischen den Ausnehmungen 13 der Führungsschiene 11 ausgebildet. Rastvorsprünge 25 sind aus dem Raststück 17 ausgeprägt, und zwar derart, daß die Vorsprünge 25 unter Bildung je eines Freischnitts 26 an ihrer Unterseite aus der Ebene des Raststücks 17 hervorstehen und so eine linienförmige Anlage auf den zugeordneten Kanten der Ausnehmungen 13 der Führungsschiene 11 finden (Figur 2). Wie die Figuren 3 und 4 deutlicher machen, bildet auch der zwischen den Rastvorsprüngen 25 im Raststück 17 verbliebene Steg 27 einen in die Ebene der Führungsschienenabschnitte 14 vorstehenden Bereich, so daß sich beiderseits des Steges 27 eine vollflächige Verbindung 28 des Raststückes 17 mit seinen Rastvorsprüngen 25 ergibt (Figur 4). Gleiches gilt auch für den oberen, den Ausprägungsknick 29 geltenden Bereich, wobei die Höhe der ausgeprägten Rastvorsprünge 25 der Höhe der Ausnehmungen 13 in der Führungsschiene 11 entspricht (Figur 2).

Das Rastblech 17 weist durchgehend in seiner Längsrichtung noch eine aussteifende Durchprägung 30
auf, deren Maß näherungsweise dem Maß der Ausprägung
der Rastvorsprünge 25 und des Steges 27 entspricht.

Die in den Figuren 1 bis 4 beschriebene Vorrichtung
arbeitet wie folgt:
Zum Verstellen der Höhe des Umlenk- oder Befestigungsbeschlages wird das Raststück 17 in Richtung des
mit 31 bezeichneten Pfeiles in die Ausnehmung 16
des Gleitstückes 15 hineingedrückt, wobei das Raststück 17 eine Schwenkbewegung um die Abstützfläche
18 vollführt. Infolgedessen treten die Rastvorsprünge
25 aus den zugeordneten Ausnehmungen 13 der Führungsschiene 11 heraus, und danach ist eine Verschiebung
des Gleitstückes 15 und somit des Umlenk- oder Befestigungsbeschlages in Richtung der Pfeile 32 ermöglicht.

Hierzu können in vorteilhafter Weise am Boden des
Gleitstückes 15 federnd gestaltete Vorsprünge ausgebildet sein, welche in entsprechend im Boden der
Führungsschiene 11 ausgebildete Öffnungen einrasten
und so die Lage des Gleitstückes 15 beim Verstellvorgang derart fixieren, daß eine Fehlverriegelung
des Raststückes 17 mit der Führungsschiene 11, wobei
die Rastvorsprünge 25 nicht exakt in den Ausnehmungen
13 der Führungsschiene 11 gelegen sein würden, ausgeschlossen ist.

Im Unfallgeschehen führt die am Umlenkbeschlag wirkende Kraft zunächst zu einer Lösung des Befestigungsmittels 20 aus dem Gleitstück 15 bis zu dessen Anlage mit dem Flansch 21 an der zugeordneten Seite des Raststückes 17. Im weiteren Verlauf werden die wirkenden Kräfte vom Befestigungsmittel 20 über die ebenen Flächen 33 des Raststückes 17 oberhalb und unterhalb der Rastvorsprünge 25 auf die Führungsschiene 11 übertragen; gleichzeitig werden weitere Kräfte über die Rastvorsprünge 25 in die Ausnehmungen 13 der Führungsschiene 11 geleitet, wobei die Rastvorsprünge in Richtung einer Belastung und Verformung der Führungsschiene 11 nachgeführt werden, so daß insgesamt mit nur drei lastaufnehmenden Teilen, nämlich dem Befestigungsmittel 20, dem Raststück 17 sowie der Führungsschiene 11 eine sichere Übertragung der im Unfallgeschehen auftretenden Kräfte gewährleistet ist.

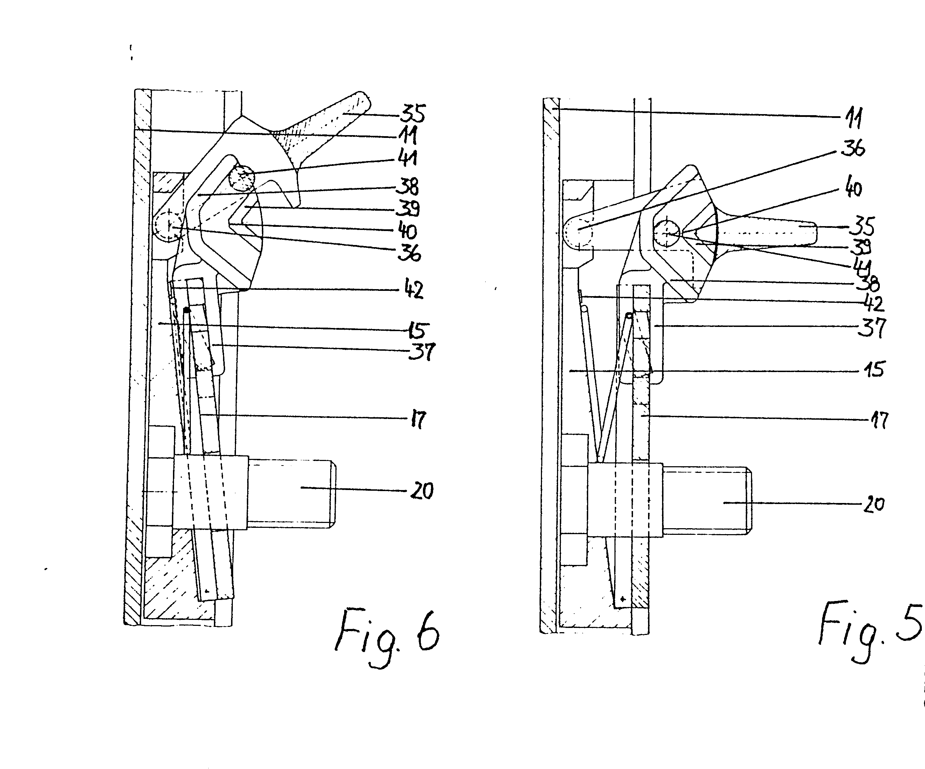

In den Figuren 5 und 6 ist weiterhin eine zweckmäßige Betätigungseinrichtung für die vorstehend beschriebene Höhenverstellvorrichtung dargestellt. Hierzu ist am Gleitstück 15 ein aus der Ebene der Führungsschiene 11 senkrecht dazu hervorstehender Betätigungshebel 35 angeordnet, welcher im Tiefsten des Gleitstückes 15 mittels einer festlagerartigen Zapfengestaltung 36 in den beiden Verschieberichtungen des Gleitstückes 15 schwenkbar gelagert ist.

An dem oberen Ende des Raststückes 17 ist ein mit diesem fest verbundener Betätigungsaufsatz 37 angeordnet, der beiderseits des ihn durchgreifenden Betätigungshebels 35 zu dessen Schwenkebene parallel aus der Ebene der Führungsschiene 11 heraustretende Führungen 38 aufweist, welche ausgehend von einem flach ausgebildeten Tiefsten sich U-artig nach außen verbreitern. Gleichfalls am Aufsatz 37 sind mit Abstand zu den Führungen 38 ebenfalls beiderseits des Betätigungshebels 35 noch Ansätze 39 angeordnet, deren räumliche Ausbildung der Form der Führungen 38 entspricht, wobei an dem dem Tiefsten der Führungen 38 zugewandten Ende der Ansätze 39 jeweils eine Abflachung 40 ausgebildet ist.

Der Betätigungshebel 35 weist beidseitig seitwärts abstehende Zapfen 41 auf, die in den durch die Führungen 38 und die Ansätze 39 des Aufsatzes 37 gebildeten Führungsbahnen zwangsgeführt sind, wobei in der Ruhelage des Betätigungshebels 35 eine schocksichernde Festlegung der Zapfen 41 zwischen dem Tiefsten der Führungen 37 und der Abflachung 40 der Ansätze 39 gegeben ist.

Das Rastblech 17 ist in gleicher Weise wie in den Figuren 1 bis 4 beschrieben ausgebildet, jedoch ist zur Begrenzung des Schwenkvorganges des Raststückes 17 im Gleitstück 15 noch ein Anschlag 42 ausgebildet.

Die Betätigungseinrichtung gemäß der vorstehend beschriebenen Ausbildung arbeitet folgendermaßen: Wird, wie in Figur 6 gezeigt, der Betätigungshebel 35 nach oben verschwenkt, so gleiten die Zapfen 41 des Betätigungshebels in den Führungsbahnen des Aufsatzes 37 zwischen den Führungen 38 und den Ansätzen 39 entlang. Aufgrund des Festlagers 36 des Betätigungshebels 35 drücken die Zapfen 41 aufgrund ihrer kreisförmigen Bewegung den Aufsatz 37 über die Führungen 38 in die Ebene der Führungsschiene 11 hinein, wobei aufgrund der festen Verbindung zwischen dem Aufsatz 37 und dem Raststück 17 letzteres in die Ausnehmung 16 im Gleitstück 15 hineingedrückt wird, und zwar bis zum Anschlag 42. Auf diese Weise wird das Raststück 17 aus der Führungsschiene 11 entriegelt.
Danach kann die Höhenverstellung des Umlenkbeschlages
durch Verschieben erfolgen, wobei bei der geschilderten
Art der Betätigung die Kraftrichtungen zur Entriegelung
und Verschiebung des Beschlages in vorteilhafter
Weise gleichlaufend ausgebildet sind.

Weiterhin ist durch die besondere Ausführung der
Führungen 38 sowie der Ansätze 39 des Betätigungsaufsatzes 37 eine Schocksicherung der Vorrichtung
gegen ein Ausrasten bei Seitenaufprall gegeben,
bei welchem die Beschleunigungsrichtung des Fahrzeuges
in Richtung der Riegelwirkung verläuft und somit
ein Entriegeln aufgrund der wirkenden Beschleunigungs-
und Verzögerungskräfte eintreten kann. Durch die
in Ruhestellung des Betätigungshebels 35 mittels
der Abflachung 40 der Ansätze 39 des Aufsatzes 37
bewirkte Fixierung der Zapfen 41 des Betätigungshebels
35 kann der Betätigungsaufsatz 37 bei wirkenden
Seitenkräften nicht in Entriegelungsrichtung geschwenkt und so das Raststück 17 auch nicht entriegelt
werden. Die sogenannte Schocksicherheit der Höhenverstellvorrichtung ist auf diese Weise sicher gewährleistet.

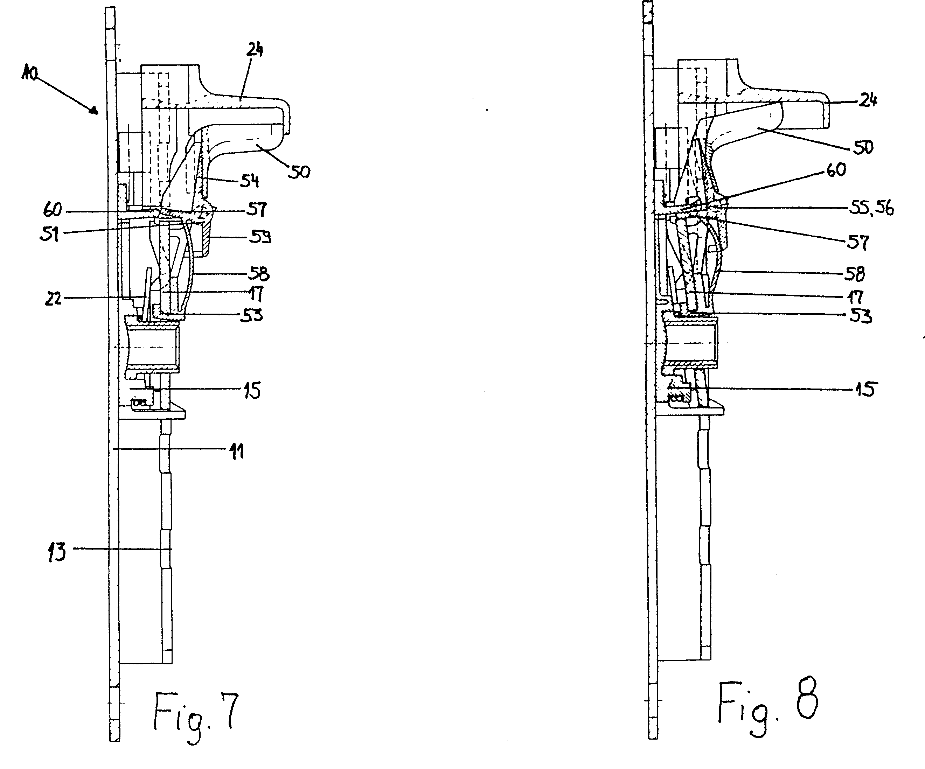

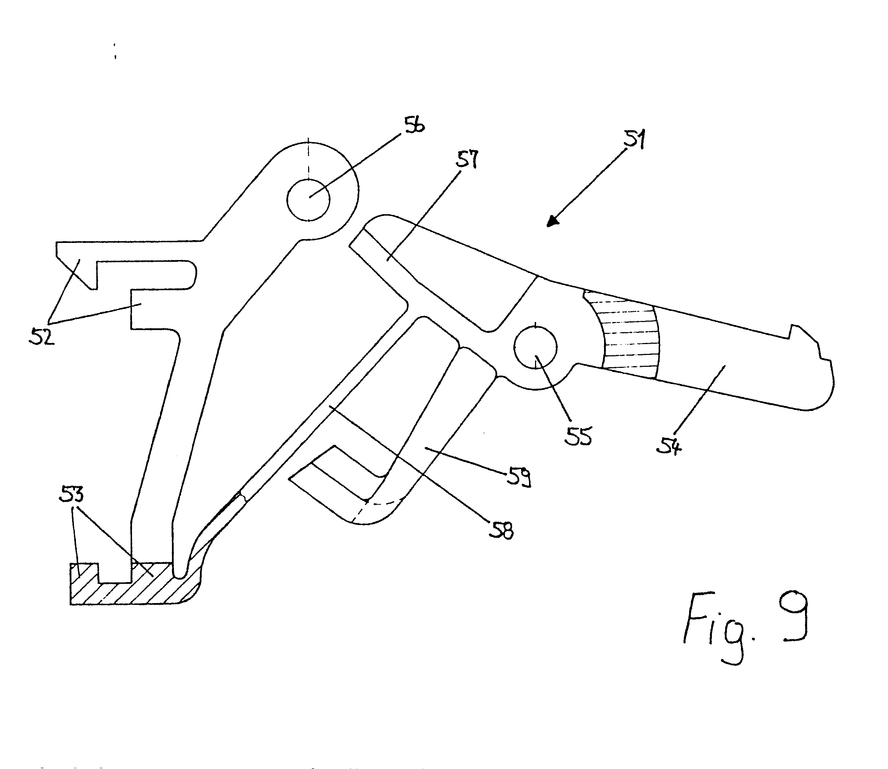

Ein weiteres Auführungsbeispiel einer Betätigungseinrichtung
für das Raststück 17, welche besonders schocksicher
gegen die beim Seitenaufprall wirkenden Kräfte ist,
ist in den Figuren 7 bis 9 dargestellt, bei welchem
zunächst am Betätigungsansatz 24 eine in Richtung
der Führungsschiene 11 eindrückbare und dabei einen
Schwenkwinkel durchlaufende Schiebetaste 50 angeordnet
ist. Die Schiebetaste 50 ist über ein Verbindungsteil
51, welches in entspanntem Zustand in Figur 9 vergrößert dargestellt ist, mit dem Raststück 17 verbunden, indem eine übergreifende Hakengestaltung 52 das Raststück 17 an dessen oberen Ende überfaßt. Eine zweite Abstützung findet das Verbindungsteil 51 am Raststück 17, indem es im Bereich des das Raststück 17 durchgreifenden Befestigungsmittels 20 für den Umlenkbeschlag eine weitere Hakengestaltung 53 aufweist. An der Schiebetaste 50 greift das Verbindungsteil 51 mit einem Arm 54 an, an dessen Ende Zapfen 55 angeordnet sind, welche im montierten Zustand des Verbindungsteils 51 in Bohrungen 56 des Teils 51 eingreifen, so daß der Arm 54 der leichten Schwenkbewegung der Schiebetaste 50 folgen kann. Der Arm 54 geht über in eine Sperrnase 57, welche wiederum über eine federnde Verbindung 58 mit der abstützenden Hakengestaltung 53 am Raststück 17 in Verbindung steht. Ein Stützbeinchen 59 liegt an der gespannten Feder 58 an und verhindert eine Drehbewegung des Armes 54 in der Lagerung 55, 56.

Wenn das in Figur 9 in entspanntem Zustand dargestellte Verbindungsteil 51 montiert und durch Zusammenfügen der Lagerung 55, 56 gespannt ist, steht in Ruhelage der Schiebetaste 50 die Sperrnase 57 in Schwenkrichtung des Raststückes 17 vor einem am Gleitstück 15 ausgebildeten Ansatz 60, so daß aufgrund der festen Verbindung von Raststück 17 und Verbindungsteil 51 aufgrund der Hakengestaltungen 52, 53 eine Bewegung des Raststückes 17 aus seiner Sperrstellung ausgeschlossen ist.

Erfolgt nun ein Eindrücken der Schiebetaste 50, so schwenkt die Sperrnase 57 des gleichzeitig geschwenkten Hebels 54 nach unten, bis sie auf der Oberkante des Raststückes 17 aufliegt und so unter dem Ansatz 60 her in Richtung auf die Führungsschiene 11 gleiten kann; dabei wird der Federsteg 58 weiter unter Spannung gesetzt. Ist die Sperrnase 57 unter dem Ansatz 60 des Gleitstückes 15 beweglich, so ist der Weg frei für die Verschwenkung des Raststückes 17 in das Gleitstück 15 hinein, was durch weiteren Druck auf die Schiebetaste 50 aufgrund deren Verbindung über den Arm 54 und die Hakengestaltung 52 des Verbindungsteils 51 erfolgt. Nach Ausrasten des Raststückes 17 ist das Gleitstück 15 längs der Führungsschiene 11 frei verschiebbar.

Wird zur Verriegelung des Raststückes 17 mit der Führungsschiene 11 die Schiebetaste 50 wieder losgelassen, so wird zunächst das Raststück 17 durch die Feder 22 wieder in die Ausgangslage zurückgedrückt, nach deren Erreichen die Feder 58 eine Rückführung der Sperrnase 57 vor den Ansatz 60 sicherstellt. Somit ist das Raststück 17 wieder gegen die im Seitenschock auftretenden Kräfte gesichert. Falls das Raststück 17 zwischen zwei Rastöffnungen der Führungsschiene 11 geschoben wird, erfolgt der Verriegelungsvorgang erst nach Belastung des Gleitstückes 15 durch den Gurtbandzug, wobei die Sicherung des Raststückes 17 wieder durch die Sperrnase 57 und den Sperransatz 60 des Gleitstückes 15 erfolgt.

In den Figuren 10 bis 13 ist ein gegenüber dem in den Figuren 7 bis 9 geschilderten Ausführungsbeispiel leicht abgewandeltes Ausführungsbeispiel einer schocksicheren Betätigung des Raststückes 17 dargestellt, bei welcher nun ein in den Verschieberichtungen des Gleitstückes 15 nach oben oder unten zu betätigender Hebel 61 für die Höhenverstellung sorgt. Auch bei diesem Ausführungsbeispiel ist ein Verbindungsteil 62 mit einer Sperrnase 63 vorgesehen, welche in Ruhelage vor dem Ansatz 60 des Gleitstückes steht, wobei in dem Verbindungsteil 62 ein Durchbruch 66 zum Durchtritt des Ansatzes 60 des Gleitstückes 15 ausgebildet ist. Das Verbindungsteil 62 ist über Hakengestaltungen 64, 65 formschlüssig mit dem Raststück 17 verbunden.

Der Betätigungshebel 61 ist über an dem Verbindungsteil 62 angeformte Arme 67 und darin angeordneter Ausnehmungen 68, welche Zapfen 69 des Betätigungshebels 61 umgreifen, mit dem Verbindungsteil 62 schwenkbar verkoppelt, so daß der Betätigungshebel 61 in den Verstellrichtungen des Gleitstückes 15 eine Schwenkbewegung ausführen kann. Weiterhin sind in den Verbindungsteil 62 längliche Ausnehmungen 70 vorgesehen, in welche die Zapfen 69 des Hebels 61 ebenfalls eingreifen, so daß die Schwenkbewegung des Hebels 61 in eine Längsbewegung des Verbindungsteiles 62 umgesetzt wird. Die Längsbewegung erfolgt dabei gegen die Wirkung einer im Verbindungsteil 62 angeformten Feder 71.

Der Hebel 61 ist seinerseits in am Betätigungsansatz 24 des Gleitstückes 15 angeformten Führungsleisten 72 über Führungsansätze 73 geführt und gehalten und verfügt über eine Abstützung gegen das Verbindungsteil 62 mittels Ansätzen 74.

Erfolgt nun entsprechend der Darstellung in Figur 12 eine Betätigung des Hebels 61 nach oben, so ziehen die Zapfen 69 über die länglichen Ausnehmungen 70 das Verbindungsteil 62 ebenfalls nach oben, wobei die Feder 71 zusammengedrückt wird. Der Verschiebe-

weg ist so bemessen, daß der Durchbruch 66 vor dem
Ansatz 60 des Gleitstückes 15 zu liegen kommt, so
daß dieser in den Durchbruch 66 hineingleiten kann
und so den Weg frei gibt für ein Hineinschwenken
des mit dem Verbindungsteil 62 formschlüssig verbundenen
Raststückes 17 in das Gleitstück 15. Dieses Einschwenken
geschieht dadurch, daß sich der Hebel 61 bei 75
am Verbindungsteil 62 abstützt und dabei sein Gegenlager
in der Zapfengestaltung 69, 70 findet, so daß die
Bewegung des Hebels 61 nach oben zu einem Hineindrücken des Verbindungsteiles 62 zusammen mit dem
Raststück 17 in das Gleitstück 15 führt. Nach Loslassen
des Betätigungshebels 61 erfolgt die Rückführung
des Raststückes 17 über die Feder 22, wobei eine
Rückführung des Verbindungsteiles 62 durch die Feder
71 herbeigeführt wird.

Bei einer Betätigung des Hebels 61 nach unten, wie
in Figur 13 dargestellt, stützen sich dessen seitliche
Ansätze 74 an den Führungsansätzen 73 mit den Führungsleisten 72 des Betätigungsansatzes 24 des Gleitstückes
15 so ab, daß über die Zapfenansätze 69 eine Entriegelungskraft auf das Raststück 17 ausgeübt wird. Gleichzeitig
erfolgt entsprechend dem zu den Figuren 7 bis 9
geschilderten Bewegungsablauf eine Verschiebung
des Verbindungsteiles 62 nach unten, so daß der
Ansatz 60 des Gleitstückes 15 über das Verbindungsteil
62 gleiten kann und damit dieses und das Raststück
17 freigibt. Dabei wird die Feder 71 gespannt, so
daß diese nach Abschluß des Bewegungsvorganges für
eine Rückführung des Verbindungsteiles 62 in die
Ruhestellung sorgen kann. Die Schwenkbewegung des
Raststückes 17 wird dadurch erreicht, daß infolge
des Gegenlagers bei 72, 73 die Zapfen 69 das Verbindungsteil 62 mit dem Raststück 17 nach innen in das Gleitstück 15 bis zur Entriegelung des Raststückes 17 drücken. Dabei erfolgt ein Gleiten zwischen den seitlichen Ansätzen 74 und den Führungsleisten 72 und Führungsansätzen 73.

Zum erleichterten Auffinden der jeweiligen Rastposition befindet sich bei dem beschriebenen Ausführungsbeispiel im Gleitstück 15 eine Blattfeder 76 mit einem der Führungsschiene 11 zugewandten Rastnocken 77, welcher in zugeordnete Rastöffnungen 78 der Führungsschiene 11 eingreifen kann, wobei die Rastöffnungen 78 den Verriegelungsausnehmungen 13 der Führungsschiene 11 entsprechen.

Die in der vorstehenden Beschreibung, den Patentansprüchen, der Zusammenfassung und der Zeichnung offenbarten Merkmale des Gegenstandes dieser Unterlagen können sowohl einzeln als auch in beliebigen Kombinationen untereinander für die Verwirklichung der Erfindung in ihren verschiedenen Ausführungsformen wesentlich sein.

Patentansprüche

Patentansprüche

1. Vorrichtung zur Höhenverstellung des oberen
   Umlenk- oder Befestigungsbeschlages für den
   Schultergurt eines Sicherheitsgurtsystems insbesondere
   in Kraftfahrzeugen, bestehend aus einer an einem
   Fahrzeug-Aufbauteil (Karosserie) angebrachten
   Riegelvorrichtung mit einer Führungsschiene
   und mit beiderseits eines Führungsschlitzes
   angeordneten Ausnehmungen, in welche ein zugeordnetes Raststück eingreift, welches in einem
   im Führungsschienenprofil längsbeweglichen Gleitstück gegen Federdruck schwenkbeweglich zwischen
   einer Rast- und einer Verschiebestellung gelagert
   ist, dadurch gekennzeichnet, daß ein Befestigungsmittel (20) für den Umlenk- oder Befestigungsbeschlag das Raststück (17) durchgreifend in dem
   Gleitstück (15) verankert ist.

2. Vorrichtung nach Anspruch 1, dadurch gekennzeichnet, daß die Verankerung des Befestigungsmittels (20) im Gleitstück (15) lösbar ausgebildet und das Befestigungsmittel (20) an seinem diesbezüglichen Ende mit einer den Durchtritt durch das Raststück (17) verhindernden Gestaltung (21) versehen ist.

3. Vorrichtung nach Anspruch 2, dadurch gekennzeichnet, daß die Gestaltung (21) aus einem bei Verrastung des Raststückes (17) zur Raststückfläche parallelen Flächenvorsprung besteht.

4. Vorrichtung nach Anspruch 3, dadurch gekennzeichnet, daß die Gestaltung als umlaufender Flansch (21) ausgebildet ist.

5. Vorrichtung nach einem der Ansprüche 1 - 4, dadurch gekennzeichnet, daß das Raststück (17) eine Durchbrechung (19) zur Durchführung des Befestigungsmittels (20) für den Umlenk- oder Befestigungsbeschlag aufweist, deren Durchmesser eine Schwenkbewegung des Raststückes (17) in Längsrichtung des Befestigungsmittels (20) erlaubt.

6. Vorrichtung nach einem der Ansprüche 1 - 5, dadurch gekennzeichnet, daß das Gleitstück (15) aus Kunststoff gefertigt und daß die Verankerung des Befestigungsmittels (20) durch Umspritzen, Verklipsen, Einpressen oder dergleichen verwirklicht ist.

7. Vorrichtung nach Anspruch 6, dadurch gekennzeichnet, daß räumlich getrennt vom Befestigungs-

mittel (20) an dem Gleitstück (15) ein aus dem
Profil der Führungsschiene (11) herausragender
Betätigungsansatz (24) angebracht ist.

8. Vorrichtung nach Anspruch 6 oder 7, dadurch
gekennzeichnet, daß das Gleitstück (15) an seinen
Außenflächen federnde Teile zum Ausgleich von
Toleranzen und Verhinderung von Klappergeräuschen
aufweist.

9. Vorrichtung insbesondere nach einem der Ansprüche
1 - 8, wobei das Raststück in seiner Raststellung
in die Ebene der Führungsschiene hineinragende
und in deren Ausnehmungen eingreifende Vorsprünge
aufweist, dadurch gekennzeichnet, daß die Rastvorsprünge (25) unter Bildung je eines Freischnitts
(26) aus dem als Stanz-/Biegeteil ausgebildeten
Raststück (17) ausgeprägt sind, so daß sich
eine linienartige Berührung der Rastvorsprünge
(25) mit der zugeordneten Fläche der Ausnehmungen
(13) der Führungsschiene (11) ergibt.

10. Vorrichtung nach Anspruch 9, dadurch gekennzeichnet, daß die Ausprägehöhe der Rastvorsprünge
(25) der Höhe der Ausnehmungen (13) der Führungsschiene (11) entspricht.

11. Vorrichtung nach Anspruch 9 oder 10, dadurch
gekennzeichnet, daß das Raststück (17) in seinem
stegartigen Bereich (27) zwischen den Rastvorsprüngen (25) ebenfalls vorstehend ausgeprägt
ist, so daß sich eine vollflächige Verbindung zwischen
dem Steg (27) und den Rastvorsprüngen (25) ergibt.

12. Vorrichtung nach einem der Ansprüche 9 - 11, dadurch gekennzeichnet, daß das Raststück (17) in seiner Längsrichtung mittig eine aussteifende Durchprägung (29) aufweist, wobei das Maß der Durchprägung (29) näherungsweise dem Maß der Ausprägung der Rastvorsprünge (25) sowie des Steges (27) entspricht.

13. Vorrichtung nach Anspruch 7, dadurch gekennzeichnet, daß der Betätigungsansatz als in dem Gleitstück (15) in dessen Verschieberichtungen schwenkbar gelagerter Betätigungshebel (35) ausgebildet ist, der mit einem mit dem Raststück (17) fest verbundenen Aufsatz (37) derart zusammenwirkt, daß die auf den Betätigungshebel (35) ausgeübte Verschwenkkraft die Verriegelung des Raststückes (17) mit der Führungsschiene (11) löst.

14. Vorrichtung nach Anspruch 13, dadurch gekennzeichnet, daß der Aufsatz (37) an dem die Schwenkbewegung ausführenden Ende des Raststückes (17) angeordnet und mit diesem in das Profil der Führungsschiene (11) einsenkbar ist.

15. Vorrichtung nach Anspruch 13 oder 14, dadurch gekennzeichnet, daß der Betätigungshebel (35) durch den Aufsatz (37) hindurchgreifend am Boden des Gleitstückes (15) mittels einer unnachgiebigen Zapfengestaltung (Festlager) (36) in beiden Verschieberichtungen schwenkbar gelagert ist.

16. Vorrichtung nach einem der Ansprüche 13 - 15, dadurch gekennzeichnet, daß der Aufsatz (37) zu beiden Seiten des hindurchgeführten Betätigungshebels (35) senkrecht aus der Ebene der Führungsschiene (11) nach Art eines sich verbreiternden U
hervortretende Führungen (38) aufweist.

17. Vorrichtung nach Anspruch 15 und 16, dadurch
gekennzeichnet, daß der Betätigungshebel (35)
beidseitig in den zugeordneten Führungen (38)
des Aufsatzes (37) gelagerte Zapfen (41) aufweist,
welche bei Ruhestellung des Betätigungshebels
(35) im Tiefsten der Führungen (38) des Aufsatzes
(37) gelegen sind.

18. Vorrichtung nach Anspruch 17, dadurch gekennzeichnet, daß zur Schocksicherung am Aufsatz
(37) in der Ebene von dessen Führungen (38)
davon beabstandete parallel dazu ausgebildete
Ansätze (39) vorgesehen sind, wodurch die Zapfen
(41) des Betätigungshebels (35) beidseits eingefaßt und geführt sind.

19. Vorrichtung nach Anspruch 18, dadurch gekennzeichnet, daß die Ansätze (39) an ihren, dem
Tiefsten der Führungen (38) zugewandten Vorderende
Abflachungen (40) aufweisen.

20. Vorrichtung nach einem der Ansprüche 13 - 19,
dadurch gekennzeichnet, daß zur Begrenzung des
Schwenkweges des Betätigungshebels (35) am Gleitstück (15) ein die Verschwenkung des Raststückes
(17) eingrenzender Anschlag (42) vorgesehen
ist.

21. Vorrichtung insbesondere nach einem der Ansprüche 1 - 12, dadurch gekennzeichnet, daß das Gleitstück (15) im Bereich des größten Schwenkweges des Raststückes (17) einen Ansatz (60) aufweist, der das Betätigungsorgan (50, 61) in dessen Ruhelage festlegt und eine Bewegung des mit dem Betätigungsorgan (50, 61) gekoppelten Raststückes (17) verhindert.

22. Vorrichtung nach Anspruch 21, dadurch gekennzeichnet, daß das Raststück (17) mit dem Betätigungsorgan (50, 61) über ein Verbindungsteil (51, 62) formschlüssig (52, 53; 64, 65) verbunden ist und daß das Verbindungsteil (51, 62) eine Sperrnase (57, 63) aufweist, die in Ruhelage des Betätigungsorgans (50, 61) in Schwenkrichtung des Raststückes (17) gegenüber dem Ansastz (60) des Gleitstückes (15) steht.

23. Vorrichtung nach Anspruch 21 oder 22, bei dem das Betätigungsorgan als in Richtung der Führungsschiene wirkende Schiebetaste ausgebildet ist, dadurch gekennzeichnet, daß das Verbindungsteil (51) über eine angeformte Feder (58) eine zweite Abstützung am Raststück (17) findet, wobei die Feder (58) mit der Sperrnase (57) verbunden ist.

24. Vorrichtung nach Anspruch 23, dadurch gekennzeichnet, daß das Verbindungsteil (51) einstückig als Kunststoffteil ausgebildet ist.

25. Vorrichtung nach Anspruch 21 oder 22, bei dem das Betätigungsorgan als in Verschieberichtung des Gleitstückes betätigbarer Hebel ausgebildet ist, dadurch gekennzeichnet, daß das formschlüssig (64, 65) mit dem Raststück (17) verbundene Verbindungsteil (62) über eine Zapfenverbindung (67, 68, 69) schwenkbar mit dem Betätigungshebel (61) gekoppelt und über eine weitere Zapfenverbindung (69, 70) gegen Federwirkung (71) längsverschiebbar angeordnet ist.

26. Vorrichtung nach Anspruch 25, dadurch gekennzeichnet, daß an dem Betätigungsansatz (24) des Gleitstückes (15) Führungsleisten (72) ausgebildet sind, an denen der Betätigungshebel (61) mit Führungsansätzen (73) geführt und gehalten ist.

27. Vorrichtung nach Anspruch 26, dadurch gekennzeichnet, daß an den Führungsansätzen (73) mit dem Verbindungsteil (62) zusammenwirkende Ansätze (74) ausgebildet sind.

28. Vorrichtung nach einem der Ansprüche 1 - 27, dadurch gekennzeichnet, daß im Gleitstück (15) eine Blattfeder (76) mit zur Führungsschiene (11) gerichtetem Rastnocken (77) angeordnet ist und daß die Führungsschiene (11) zugeordnete Rastöffnungen (78) aufweist.

Zusammenfassung

0187225

*Fig. 1*

*Fig. 2*

*Fig. 3*

Fig. 4

Fig. 5

Fig. 6

0187225

0187225

Fig. 8

Fig. 7

Fig. 9

Fig. 11

Fig. 10

Fig. 12

Fig. 13